# EUROPEAN PATENT APPLICATION

(11) **EP 4 468 553 A1**
(43) Date of publication of application: **27.11.2024**
(21) Application number: 23759102.9
(22) Date of filing: 17.02.2023
(51) Int. Cl.: H02J 7/00, B60L 53/00

(54) **VOLTAGE CONTROL METHOD AND APPARATUS**

(30) Priority: 28.02.2022 CN 202210187471
(71) Applicant: Beijing Chehejia Automobile Technology Co., Ltd., Beijing 101300 (CN)
(72) Inventor: WANG, Dehai, Beijing 101300 (CN)
(74) Representative: Loo, Chi Ching
(86) International application number: PCT/CN2023/076906
(87) International publication number: WO 2023/160477

(57) **Abstract**

The present disclosure relates to a voltage control method and apparatus, and an electronic device, a vehicle and a storage medium. The method comprises: generating a voltage control signal according to first working condition information of a direct-current converter and second working condition information of a battery; and according to the voltage control signal, controlling an output voltage of the direct-current converter to be less than the maximum charging voltage of the battery.

## Description

### CROSS-REFERENCE TO THE RELATED APPLICATION

The present application is based on and claims priority to Chinese patent application No. 202210187471.2, filed on February 28, 2022 before the China National Intellectual Property Administration, the entire contents of which are incorporated herein by reference.

### TECHINCAL FIELD

The present disclosure relates to the field of voltage control technology, and in particular to a voltage control method, a voltage control apparatus, an electronic device, a vehicle and a storage medium.

### BACKGROUND

With the development of the new energy vehicle industry, various performances of new energy vehicles are constantly optimized, for the vehicle safety and user driving experience, the low voltage power supply system is receiving more and more attention. The low voltage rechargeable batteries in the low voltage power supply system have evolved from lead-acid batteries to lithium batteries. Since the energy density of lithium batteries is much greater than that of lead-acid batteries, the total weight of the vehicle can be reduced. In addition, lithium batteries can be charged and discharged quickly, and have a long service life and low maintenance costs.

However, when load dump occurs in the vehicle, the lithium battery is easily overcharged due to an instantaneous increasement in the output voltage of the DC converter, causing the lithium ions in the battery to precipitate, thus affecting the service life of the lithium battery.

### SUMMARY

The present disclosure provides a voltage control method, a voltage control apparatus, an electronic device, a vehicle and a storage medium, that can avoid overcharging of lithium batteries and reduce the risk of lithium ion precipitation, thereby extending the service life of lithium batteries.

In a first aspect, the present disclosure provides a voltage control method, including:
generating a voltage control signal according to a first operating condition information of a direct current (DC) converter and a second operating condition information of a battery; and
controlling, according to the voltage control signal, an output voltage of the DC converter to be less than a maximum charging voltage of the battery.

In some embodiments, the first operating condition information includes at least one of an output current, an output voltage, a voltage overshoot of the output voltage, a voltage overshoot duration of the output voltage, an output current change rate, and an output voltage change rate; the second operating condition information includes at least one of a battery state of charge (SOC), a battery temperature, a battery charging capability, a battery anti-charging capability, a battery discharge duration, and a battery discharge capability.

In some embodiments, the generating a voltage control signal according to the first operating condition information of a direct current (DC) converter and the second operating condition information of a battery includes:
determining the output current change rate of the DC converter according to the first operating condition information;
determining the battery SOC according to the second operating condition information; and
generating the voltage control signal in response to the output current change rate being greater than a preset change rate and the battery SOC being greater than a preset state of charge.

In some embodiments, the generating the voltage control signal according to the first operating condition information of the DC converter and the second operating condition information of the battery includes:
determining the output current change rate of the DC converter according to the first operating condition information;
determining the battery charging capacity according to the second operating condition information; and
generating the voltage control signal in response to the output current change rate being greater than a preset change rate and the battery charging capacity being less than a preset charging capacity.

In some embodiments, the generating the voltage control signal according to the first operating condition information of the DC converter and the second operating condition information of the battery includes:
determining the output current change rate of the DC converter according to the first operating condition information;
determining the battery SOC and the battery charging capacity according to the second operating condition information;
generating the voltage control signal in response to the output current change rate being greater than a preset change rate, the battery SOC being greater than a preset state of charge, and the battery charging capacity being less than a preset charging capacity.

In some embodiments, the controlling, according to the voltage control signal, the output voltage of the DC converter to be less than the maximum charging voltage of the battery includes:
controlling, according to the voltage control signal, the output voltage to decrease to a first target voltage within a first preset time range, wherein the first target voltage is determined based on a voltage overshoot of the output voltage in a state of load dump.

In some embodiments, the first target voltage is determined based on a voltage overshoot of the output voltage in a state of load dump and a requested charging voltage of the battery.

In some embodiments, the voltage control method further includes:
controlling the output voltage to be less than the maximum charging voltage of the battery within a second preset time range, wherein the second preset time range is determined based on the voltage overshoot duration of the output voltage under the state of load dump and the battery SOC.

In some embodiments, a minimum value of the second preset time range is the voltage overshoot duration of the output voltage in the state of load dump; a maximum value of the second preset time range is a time required for completely discharging remaining charges in the battery that is determined based on the battery SOC.

In some embodiments, the voltage control method further includes:
controlling the output voltage to increase to a second target voltage, wherein the second target voltage is a voltage determined based on the second operating condition information before the voltage control signal is generated.

In some embodiments, the controlling the output voltage to increase to the second target voltage includes:
controlling the output voltage to increase to the second target voltage at a preset lifting rate, wherein the preset lifting rate is within a preset rate range, and the preset rate range is determined based on performances of components in a vehicle and a target discharge duration of the battery.

In a second aspect, the present disclosure provides a voltage control apparatus, including:
a signal generation module, configured to generate a voltage control signal according to a first operating condition information of a DC converter and a second operating condition information of a battery; and
a control module, configured to control the output voltage of the DC converter to be less than the maximum charging voltage of the battery according to the voltage control signal.

In a third aspect, the present disclosure provides an electronic device, including: a processor configured to execute a computer program stored in a memory, and the computer program, when executed by the processor, implements the steps of any one of the methods provided in the first aspect.

In a fourth aspect, the present disclosure provides a vehicle, including:
a battery for supplying power to a load;
a DC converter, configured to reduce a voltage and transmit the reduced voltage signal to the battery; and
a vehicle controller, configured to execute the steps of any one of the methods provided in the first aspect.

In a fifth aspect, the present disclosure provides a computer readable storage medium having a computer program stored thereon, and the computer program, when executed by a processor, implements the steps of any one of the methods provided in the first aspect.

In a sixth aspect, the present disclosure provides a computer program product. When the computer program product is run on a computer, the computer is enabled to execute the steps of any one of the methods provided in the first aspect. In the technical solution provided by the present disclosure, a voltage control signal is generated according to the first operating condition information of the DC converter and the second operating condition information of the battery, and the output voltage of the DC converter is controlled to be less than the maximum charging voltage of the battery according to the voltage control signal. Thus, the output voltage of the DC converter is the charging voltage of the battery. By controlling the charging voltage of the battery to be below the maximum tolerable charging voltage, overcharging of the battery can be avoided and the risk of lithium ion precipitation in the battery can be reduced, thereby extending the service life of the battery.

### BRIEF DESCRIPTION OF THE DRAWINGS

In order to more clearly illustrate technical solutions of embodiments of the present disclosure or the related art, drawings that are used in explaining the embodiments or the related art are briefly introduced below. Apparently, other drawings may be obtained by those skilled in the art based on these drawings without paying any creative work.
FIG. 1 is a schematic diagram illustrating an application scenario provided by the present disclosure;
FIG. 2 is a schematic flow chart of a voltage control method provided by the present disclosure;
FIG. 3 is a schematic flow chart of another voltage control method provided by the present disclosure;
FIG. 4 is a schematic flow chart of yet another voltage control method provided by the present disclosure;
FIG. 5 is a schematic flow chart of yet another voltage control method provided by the present disclosure;
FIG. 6 is a schematic flow chart of yet another voltage control method provided by the present disclosure;
FIG. 7 is a schematic flow chart of yet another voltage control method provided by the present disclosure;
FIG. 8 is a schematic flow chart of yet another voltage control method provided by the present disclosure;
FIG. 9 is a schematic flow chart of yet another voltage control method provided by the present disclosure;
FIG. 10 is a schematic structural diagram of a voltage control apparatus provided by the present disclosure;
FIG. 11 is a schematic structural diagram of a vehicle provided by the present disclosure; and
FIG. 12 is a schematic structural diagram of an electronic device provided by the present disclosure.

### DETAILED DESCRIPTION

In order to more clearly understand the above objectives, features and advantages of the present disclosure, the solutions of the present disclosure will be further described below. It should be noted that the embodiments of the present disclosure and the features in the embodiments can be combined with each other without conflict.

Many specific details are set forth below to facilitate a full understanding of the present disclosure, but the present disclosure may also be implemented in other ways different from those described herein. Apparently, the embodiments in the specification are only part of the embodiments of the present disclosure, rather than all of the embodiments.

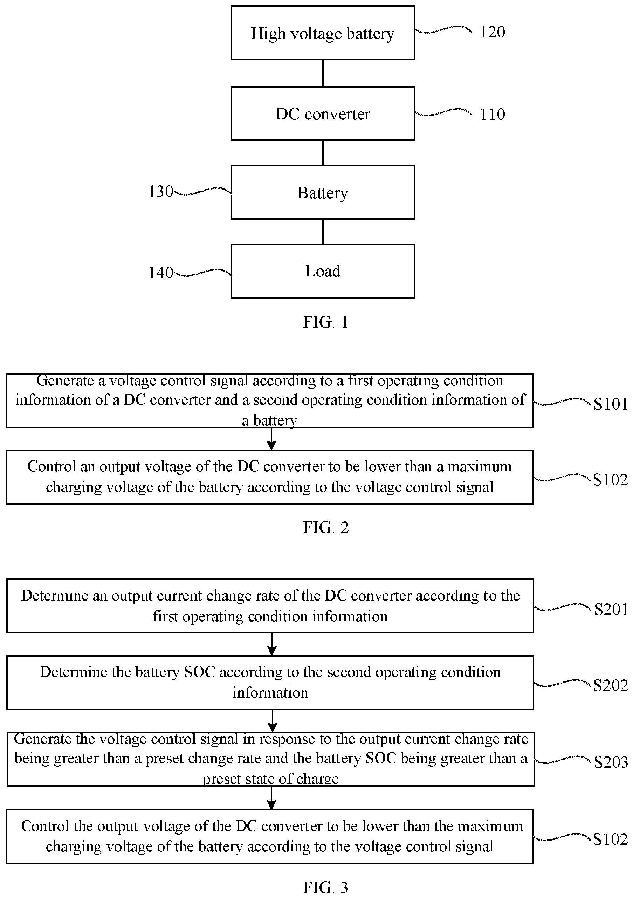

FIG. 1 is a schematic diagram illustrating an application scenario provided by the present disclosure. As shown in FIG. 1, an input end of a direct current (DC) converter 110 is electrically connected to an output end of a high voltage battery 120, an output end of the DC converter 110 is electrically connected to an input end of a battery 130, and an output end of the battery 130 is electrically connected to a load 140. The DC converter 110 is a DC buck converter configured for converting a high voltage signal output by the high voltage battery 120 into a low voltage signal that is suitable for charging the battery 130. The low voltage signal output by the battery 130 can supply electrical energy to the load 140. Exemplarily, in a vehicle, a high voltage battery provides electrical energy to a motor and other high voltage components, and can also provide electrical energy to a low voltage battery through a DC converter. The low voltage battery here is the battery in the present disclosure. The low voltage battery can provide electrical energy to low voltage loads in the vehicle. The low voltage loads in the vehicle may be, for example, a brake, a steering wheel, an automatic driving system, instruments, etc.

The battery in the present disclosure may be a lithium battery. When the actual charging voltage of the battery is greater than the maximum tolerable charging voltage of the battery, the battery will be overcharged. At this time, the lithium ions in the battery are more likely to precipitate, and the precipitation of lithium ions is irreversible, which will affect the service life of the lithium battery. Under normal circumstances, the DC converter will charge the battery. However, when the wiring harness is aging, the contact is poor, or the vehicle is in certain special operating conditions, the battery will be disconnected from the low voltage load. At this time, the DC converter will output a surge voltage with a higher voltage and a longer duration. This situation is called load dump.

During driving a vehicle, in response to a large low voltage load of the vehicle being dumped, for example, turning the steering wheel on the spot sharply, slamming the brake on, turning on automatic driving, etc., the output voltage of the DC converter will increase instantaneously, that is, the charging voltage of the battery will increase instantaneously, and will be greater than the maximum tolerable charging voltage of the battery. As a result, the overcharging of the battery is easily to occur when a large low voltage load of the vehicle is dumped.

In view of the above problem, the present disclosure provides a technical solution in which a voltage control signal is generated according to a first operating condition information of the DC converter and a second operating condition information of the battery, and the output voltage of the DC converter is controlled to be less than the maximum charging voltage of the battery according to the voltage control signal. In this way, the output voltage of the DC converter is the charging voltage of the battery, and the charging voltage of the battery is controlled to be less than the maximum tolerable charging voltage, so that the battery is prevented from being overcharged and the risk of precipitating lithium ions in the battery is reduced, thereby extending the service life of the battery.

FIG. 2 is a schematic flow chart of a voltage control method provided by the present disclosure. As shown in FIG. 2, the method includes steps S101 and S 102.

At S101, a voltage control signal is generated according to a first operating condition information of the DC converter and a second operating condition information of the battery.

Exemplarily, the first operating condition information may be at least one of an output current, an output voltage, a voltage overshoot of the output voltage, a voltage overshoot duration of the output voltage, an output current change rate, an output voltage change rate, and the like. The second operating condition information may be at least one of a state of charge (SOC) of the battery, a temperature of the battery, a charging capability of the battery, an anti-charging capability of the battery, a discharge duration of the battery, a discharge capability of the battery and the like.

The output end of the DC converter is electrically connected to the input end of the battery. The DC converter can convert the high voltage output by the high voltage battery into a low voltage. The battery can be charged by the low voltage signal output by the DC converter. That is, the output voltage of the DC converter is the charging voltage of the battery. Exemplarily, whether the current operating condition of the vehicle is the load dump can be determined based on the first operating condition information of the DC converter. When the vehicle is determined to be in the state of load dump currently, it can be further determined whether a large load is currently to be dumped. For example, when the output voltage of the DC converter is greater than a requested charging voltage of the battery, or when the output current change rate of the DC converter is large, the current operating condition of the vehicle can be determined as the state of load dump; when the output voltage of the DC converter is greater than the maximum tolerable charging voltage of the battery, or when the output current change rate of the DC converter is greater than a preset change rate, it can be determined that the load currently dumped by the vehicle is a large load.

When the load currently dumped by the vehicle is determined to be a large load, it can be determined whether the output voltage of the DC converter, that is, the charging voltage of the battery, needs to be reduced according to the second operating condition information. When it is determined that the charging voltage of the battery needs to be reduced, a voltage control signal is generated to control the reduction of the charging voltage of the battery. For example, if the battery SOC is high and the battery charging capacity is weak, it can be determined that the charging voltage of the battery needs to be reduced, and a voltage control signal will be generated; if the battery SOC is high or the battery charging capacity is strong, it can be determined that the charging voltage of the battery does not need to be reduced, and no voltage control signal will be generated.

At S102, the output voltage of the DC converter is controlled to be less than the maximum charging voltage of the battery according to the voltage control signal.

Exemplarily, based on the above embodiment, when a large load is currently dumped by the vehicle, the charging voltage of the battery is greater than the maximum tolerable charging voltage of the battery. At this time, the charging voltage of the battery can be reduced according to the voltage control signal, so that the reduced charging voltage is less than the maximum tolerable charging voltage of the battery, thereby avoiding the overcharging of the battery.

For example, the maximum tolerable charging voltage of the battery is 14V, and the vehicle is in the state of sharply turning the steering wheel on the spot, that is, the vehicle is in a state of dumping a large load. In this case, the output voltage of the DC converter is 14.2V. According to the voltage control signal, the charging voltage of the battery can be controlled to reduce from 14.2V to be less than or equal to 14V.

In this embodiment, a voltage control signal is generated according to the first operating condition information of the DC converter and the second operating condition information of the battery. The DC converter is configured to reduce the voltage, and the output voltage of the DC converter is controlled to be less than the maximum charging voltage of the battery. In this way, the output voltage of the DC converter is the charging voltage of the battery. By controlling the charging voltage of the battery to be below the maximum tolerable charging voltage, overcharging of the battery can be avoided and the risk of lithium ion precipitation in the battery can be reduced, thereby extending the service life of the battery.

FIG. 3 is a schematic flow chart of another voltage control method provided by the present disclosure. Based on the embodiment shown in FIG. 2, FIG. 3 illustrates an implementation manner for executing S101, including steps S201 to S203.

At S201, an output current change rate of the DC converter is determined according to the first operating condition information.

When the vehicle is in the state of load dump, the output voltage of the DC converter increases instantaneously. Accordingly, the output current of the DC converter rises rapidly, and the output current change rate of the DC converter will increase significantly. Exemplarily, the first operating condition information includes the output current change rate, so the output current change rate of the DC converter can be directly obtained from the first operating condition information. For example, when the vehicle is in an operating condition of sharply turning the steering wheel on the spot, the output current change rate of the DC converter may be directly obtained as 1A/ms. The output current change rate may be a positive value or a negative value. If the output current change rate is a positive value, it is a rate at which the output current increases. If the output current change rate is a negative value, it is a rate at which the output current decreases.

In other implementations, the first operating condition information may include the output current of the DC converter at various moments, and based on the output current of the DC converter at various moments, the output current change rate of the DC converter may be determined. For example, when the vehicle is in the operating condition of sharply turning the steering wheel on the spot, and the first operating condition information includes the output current at various moments, according to the output current I1 at moment T and the output current I2 at moment T+20ms, the change in the output current in 20ms is determined to be I2-I1=20A. Therefore, it can be determined that the output current change rate of the DC converter is 20A/20ms, that is, 1A/ms.

At S202, the battery SOC is determined according to the second operating condition information.

The battery SOC may reflect the remaining capacity of the battery. The SOC is usually expressed as a ratio of the remaining capacity of the battery to a capacity thereof when the battery is fully charged. The battery SOC being 0 means that the battery is completely discharged, and the battery SOC being 1 means that the battery is fully charged. The higher the battery SOC, the more remaining capacity in the battery, and the greater the voltage across the battery. Exemplarily, the second operating condition information includes the battery SOC, so the battery SOC may be directly obtained from the second operating condition information.

In other implementations, the second operating condition information may include the voltage across the battery, and the battery SOC is determined based on the voltage across the battery.

At S203, in response to the output current change rate being greater than a preset change rate and the battery SOC being greater than a preset state of charge, the voltage control signal is generated.

Exemplarily, taking into account various vehicle operating conditions of dumping a large load, the minimum output current change rate among all output current change rates under various states of dumping a large load is determined, and the minimum output current change rate is determined as the preset change rate. For example, the preset change rate may be 1A/ms. If the output current change rate of the DC converter is greater than the preset change rate, it means that the output current of the DC converter increases instantaneously and the output voltage of the DC converter has exceeded the maximum tolerable charging voltage of the battery, that is, the vehicle is currently in the state of dumping a large load.

Exemplarily, taking into account various vehicle operating conditions of dumping a large load, the maximum single discharge capacity, among all single discharge capacities of the battery under various conditions of dumping a large load, is determined, and the preset SOC is determined based on the maximum single discharge capacity. For example, the preset SOC may be 80%. If the battery SOC is greater than the preset SOC, it means that the battery SOC is high and the remaining capacity in the battery is large. For a single load dump of the vehicle, the remaining capacity in the battery is sufficient to support the completion of the load dump, thereby avoiding the over-discharge of the battery and ensuring the normal use of the vehicle.

Based on the above embodiment, if the output current change rate is greater than the preset change rate and the battery SOC is greater than the preset state of charge, it means that the vehicle is in a state of dumping a large load and the battery SOC is high, that is, the remaining capacity in the battery is sufficient to support the load dump. At this time, a voltage control signal may be generated to reduce the charging voltage of the battery while avoiding the complete release of the remaining capacity in the battery, thereby avoiding the over-discharge of the battery.

In this embodiment, the output current change rate of the DC converter is determined according to the first operating condition information; the battery SOC is determined according to the second operating condition information; if the output current change rate is greater than the preset change rate, and the battery SOC is greater than the preset state of charge, a voltage control signal is generated to reduce the charging voltage of the battery. Since the battery SOC is high and the remaining capacity in the battery is large, the remaining capacity in the battery will not be completely released even if the battery is discharged caused by reducing the charging voltage, which can avoid the over-discharge of the battery, thereby extending the service life of the battery and ensuring the normal use of the vehicle.

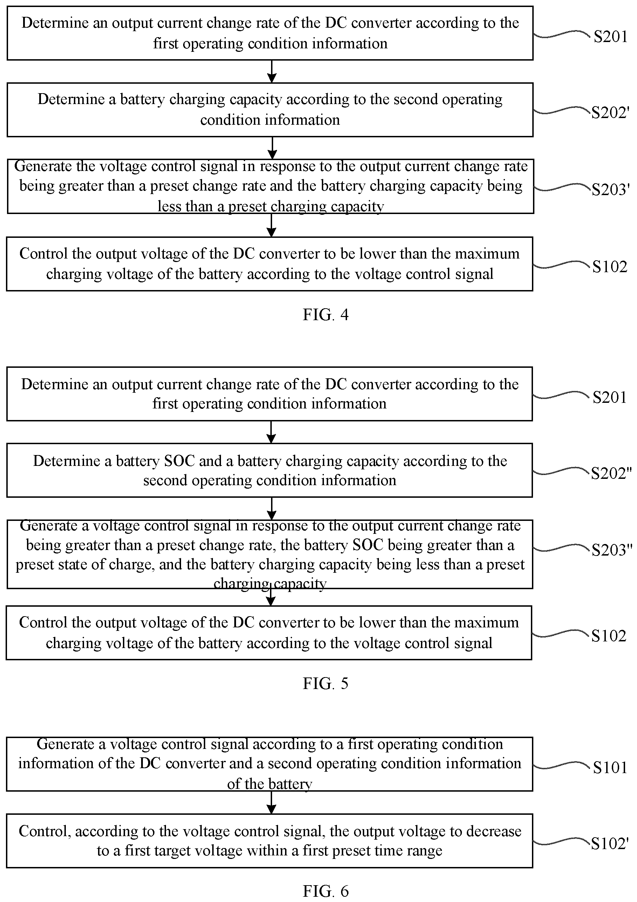

FIG. 4 is a schematic flow chart of yet another voltage control method provided by the present disclosure. Based on the embodiment shown in FIG. 2, FIG. 4 illustrates another implementation manner for executing S101, including steps S201, S202' and S203'.

At S201, an output current change rate of the DC converter is determined according to the first operating condition information.

At S202', a battery charging capacity is determined according to the second operating condition information.

The battery charging capacity may be measured by physical quantities such as the charging rate, the charging current, and the charging time. The charging rate is the multiple of the charging current relative to the rated capacity of the battery cell, represented by C. For example, the rated capacity of the battery is 100Ah, if the battery is charged with a current of 100A, then the charge rate is 1C, that is, the battery may be fully charged in 1 hour; if the battery is charged with a current of 200A, then the charge rate is 2C, that is, the battery may be fully charged in 0.5 hours; if the battery is charged with a current of 50A, then the charge rate is 0.5C, that is, the battery may be fully charged in 2 hours. Exemplarily, the second operating condition information may include at least one of the charging rate, charging current, and charging time. In this way, at least one of the charging rate, charging current, and charging time may be directly obtained from the second operating condition information, so that the battery charging capacity may be determined based on at least one of the charging rate, charging current, and charging time. For example, the higher the charging rate, the stronger the battery charging capacity; the greater the charging current, the stronger the battery charging capacity; the shorter the charging time, the stronger the battery charging capacity.

In other embodiments, the second operating condition information may include the battery SOC and the battery temperature, and the battery charging capacity is determined based on the battery SOC and the battery temperature. The lower the battery SOC, the stronger the battery charging capacity, and the battery capacity is stronger when the battery temperature is within a certain temperature range.

At S203', in response to the output current change rate being greater than a preset change rate and the battery charging capacity being less than a preset charging capacity, the voltage control signal is generated.

Exemplarily, taking into account various vehicle operating conditions of dumping a large load, the minimum output current change rate among all the output current change rates under various states of dumping a large load is determined, and the minimum output current change rate is determined as the preset change rate. For example, the preset change rate may be 1A/ms. If the output current change rate of the DC converter is greater than the preset change rate, it means that the output current of the DC converter increases instantaneously and the output voltage of the DC converter has exceeded the maximum tolerable charging voltage of the battery, that is, the vehicle is currently in the state of dumping a large load.

Exemplarily, the preset charging capacity may be determined based on the corresponding charging current at each stage of the charging process of the battery, for example, the preset charging capacity may be 30A. If the battery charging capacity is less than the preset charging capacity, it means that the battery charging capacity is weak, and the requested charging current required by the battery is small at this time. In this case, the current charging capacity of the battery cannot withstand a large charging current, and an irreversible damage is caused to the battery if the charging current is too large.

Based on the above embodiment, if the output current change rate is greater than the preset change rate and the battery charging capacity is less than the preset charging capacity, it means that the vehicle is in a state of dumping a large load, and the battery charging capacity is weak (that is, the battery charging capacity can withstand a smaller charging current). In this case, a voltage control signal may be generated to reduce the charging current of the battery while reducing the charging voltage of the battery, so that the charging current of the battery matches the battery charging capacity, avoiding irreversible damage to the battery caused by excessive charging current.

In the present embodiment, the output current change rate of the DC converter is determined according to the first operating condition information; the battery SOC and the battery charging capacity are determined according to the second operating condition information; if the output current change rate is greater than the preset change rate, and the battery charging capacity is less than the preset charging capacity, a voltage control signal is generated to reduce the charging voltage of the battery, and the charging current of the battery is reduced accordingly. Since the battery charging capacity is weak and the tolerable charging current is small, the charging current of the battery is matched with the battery charging capacity to avoid irreversible damage to the battery caused by excessive charging current, thereby extending the service life of the battery.

FIG. 5 is a schematic flow chart of yet another voltage control method provided by the present disclosure. Based on the embodiment shown in FIG. 2, FIG. 5 illustrates another implementation manner for executing S101, including steps S201, S202" and S203".

At S201, an output current change rate of the DC converter is determined according to the first operating condition information.

At S202", a battery SOC and a battery charging capacity are determined according to the second operating condition information.

For a detailed illustration of S202", reference may be made to illustrations related to S202 and S202' in the above embodiments, which will not be repeated here.

At S203", if the output current change rate is greater than a preset change rate, the battery SOC is greater than a preset state of charge, and the battery charging capacity is less than a preset charging capacity, a voltage control signal is generated.

For a detailed illustration of S203", reference may be made to illustrations related to S203 and S203' in the above embodiments, which will not be repeated here.

In the present embodiment, the output current change rate of the DC converter is determined according to the first operating condition information; the battery SOC and the battery charging capacity are determined according to the second operating condition information; if the output current change rate is greater than the preset change rate, the battery SOC is greater than the preset state of charge, and the battery charging capacity is less than the preset charging capacity, a voltage control signal is generated, so that the charging voltage of the battery is reduced, thereby avoiding the over-discharge of the battery, extending the service life of the battery, and ensuring the normal use of the vehicle. In addition, as the charging voltage of the battery is reduced, the charging current of the battery is reduced accordingly, which can avoid irreversible damage to the battery caused by excessive charging current, thereby extending the service life of the battery.

FIG. 6 is a schematic flow chart of yet another voltage control method provided by the present disclosure. On the basis of the embodiment shown in FIG. 2, FIG. 6 illustrates an implementation manner for executing S 102, such as step S 102'.

At S 102', the output voltage is controlled, according to the voltage control signal, to decrease to a first target voltage within a first preset time range.

The first target voltage is determined based on a voltage overshoot of the output voltage in the state of load dump.

The requested charging voltage of the battery is generated in real time based on a charging stage in the charging process that the battery is located, the remaining capacity of the battery, the battery SOC and the like. In this way, the requested charging voltage of the battery is determined based on the battery's actual operating conditions, which changes in real time during the entire charging process. For example, when the battery SOC is low, the requested charging voltage of the battery is larger; when the battery SOC is higher, the requested charging voltage of the battery is smaller. In this way, the charging voltage of the battery can be dynamically adjusted to improve the performance and charging effect of the battery. When the vehicle is in the state of load dump, the output voltage of the DC converter is greater than the requested charging voltage of the battery. This situation can be called voltage overshoot, where a difference between the output voltage of the DC converter and the requested charging voltage of the battery is a voltage overshoot amount, and the duration in which the output voltage of the DC converter is greater than the requested charging voltage of the battery is a voltage overshoot duration.

Exemplarily, the first target voltage may be determined based on the voltage overshoot of the output voltage under the state of load dump and the requested charging voltage of the battery. According to the voltage control signal, the output voltage of the DC converter may be reduced to the first target voltage. The output voltage of the DC converter will be maintained to be lower than the maximum charging voltage of the battery even if it continues to be affected by the load dump. For example, when the vehicle is in a condition where the steering wheel is turned sharply on the spot, the voltage overshoot is 0.2V, and the requested charging voltage of the battery is 14V. Based on the difference between the voltage overshoot and the requested charging voltage, 14V-0.2V, the first target voltage may be determined to be 13.8V. Under the action of the voltage control signal, the charging voltage of the battery is controlled to be reduced from 14V to 13.8V. As the load dumping process proceeds, the charging voltage of the battery will rise, but it can always be maintained below 14V.

The control time required for dropping the output voltage to the first target voltage is 't'. If 't' is short and less than the response time of the voltage control signal, then the voltage control signal will fail to respond, so that the output voltage cannot be reduced to the first target voltage. If't' is long and is greater than the time of a single load dump of the vehicle, then the output voltage has not reduced to the first target voltage when the vehicle has completed the single load dump, thus the battery still has the problem of overcharge. Based on the above, the response time of the voltage control signal is determined as the minimum value within the first preset time range, the time require for a single load dumping of the vehicle is determined as the minimum value within the first preset time range, and the control time required for dropping the output voltage to the first target voltage is set within the first preset time range, which can not only ensure a smooth response of the voltage control signal, but also reduce the risk of battery overcharging.

In the present embodiment, the output voltage is controlled, according to the voltage control signal, to be reduced to a first target voltage within a first preset time range, the first target voltage being determined based on the voltage overshoot of the output voltage under the state of load dumping, so that the charging voltage of the battery can be controlled to a voltage value that matches the current charging stage of the battery, thereby meeting the battery's demand for charging voltage in the current charging stage, and ensuring the charging effect of the battery and the performance of the battery. In addition, completing the output voltage reduction within the preset time range can not only ensure a smooth response of the voltage control signal but also reduce the risk of battery overcharging.

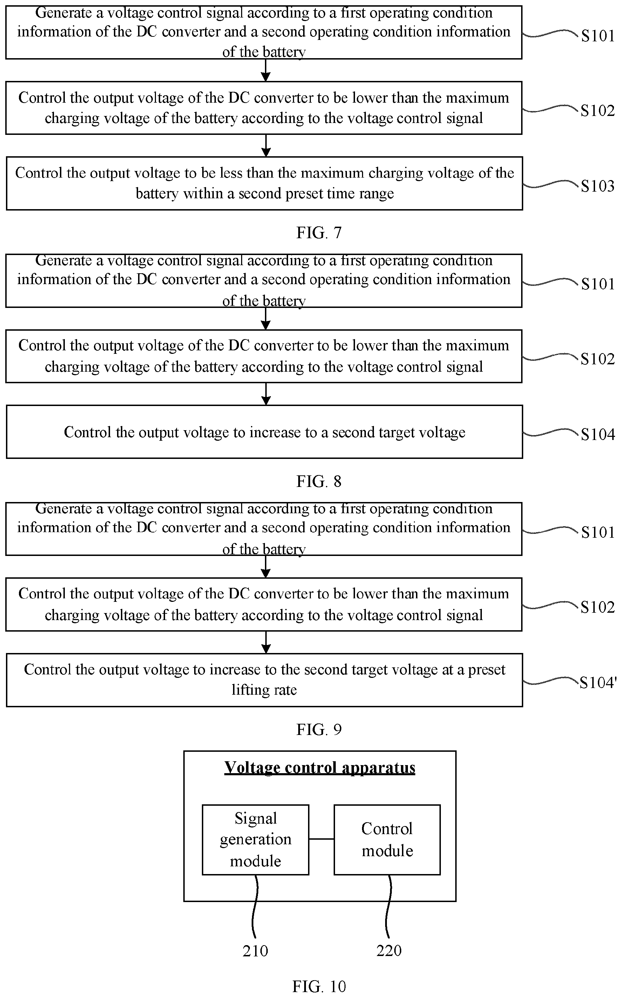

FIG. 7 is a schematic flow chart of yet another voltage control method provided by the present disclosure. On the basis of the embodiment shown in FIG. 2, the method of FIG. 7 further includes step S103.

At S103, the output voltage is controlled to be less than the maximum charging voltage of the battery in a second preset time range.

The second preset time range is determined based on the voltage overshoot duration of the output voltage in the state of load dump and the battery SOC.

After being controlled to drop to be less than the maximum charging voltage of the battery, the output voltage needs to maintain to be less than the maximum charging voltage of the battery for a period of time before the vehicle completes the load dumping, so that during the entire process of load dumping of the vehicle, the charging voltage of the battery will not exceed the maximum tolerable charging voltage of the battery, thereby reducing the risk of battery overcharging. Therefore, the time during which the output voltage is less than the maximum charging voltage of the battery cannot be too short. If the time during which the output voltage is less than the maximum charging voltage of the battery is less than the duration of the load dumping state of the vehicle, the charging voltage of the battery will exceed the maximum tolerable charging voltage of the battery before the load dumping of the vehicle is completed, thereby increasing the risk of battery overcharging. The duration of the load dumping state of the vehicle can be represented by the voltage overshoot duration of the output voltage.

In addition, the time during which the output voltage is less than the maximum charging voltage of the battery cannot be too long. If the time during which the output voltage is less than the maximum charging voltage of the battery is longer than the time required for the remaining charges of the battery to be completely released, then in the time during which the output voltage is less than the maximum charging voltage of the battery, the battery will be in a continuous discharge state until the remaining charges of the battery are completely released, which can easily cause the over-discharge of the battery.

Based on the above embodiment, the voltage overshoot duration of the output voltage in the state of load dumping the vehicle can be determined as the minimum value in the second preset time range, and the time required for completely releasing the remaining charges of the battery that is determined based on the battery SOC is taken as the maximum value in the second preset time range, so that the second preset time range is determined.

In the present embodiment, in the second preset time range that is determined based on the voltage overshoot duration of the output voltage under the state of load dump and the battery SOC, the output voltage is controlled to be less than the maximum charging voltage of the battery, so that in the second preset time range, the charging voltage of the battery does not exceed the maximum tolerable charging voltage of the battery before the load dump of the vehicle is completed, which can reduce the risk of battery overcharging. In addition, the remaining charges of the battery are prevented from being completely released, thereby avoiding the over-discharging of the battery and ensuring the normal use of the vehicle.

FIG. 8 is a schematic flow chart of yet another voltage control method provided by the present disclosure. On the basis of the embodiment shown in FIG. 2, the method of FIG. 8 further includes step S104.

At S104, the output voltage is controlled to increase to a second target voltage.

The second target voltage is a voltage determined based on the second operating condition information before the voltage control signal is generated.

Under the action of the voltage control signal, the output voltage is reduced to a value less than the maximum charging voltage of the battery, then the voltage control signal is released, and the output voltage is controlled to increase from a voltage value less than the maximum charging voltage of the battery to the second target voltage. The second target voltage may be the requested voltage of the battery before the voltage control signal is effected. Since the requested voltage of the battery is determined based on the second operating condition information of the battery, the second target voltage may be determined based on the second operating condition information of the battery. In the process of the output voltage rising to the second target voltage, the first operating condition information of the DC converter and the second operating condition information of the battery may be monitored continuously. When the conditions for generating the voltage control signal are met, the process returns to S101. In this way, the charging state of the battery can be continuously monitored, so that the risk of overcharging during the entire use process of the battery can be reduced, and the service life of the battery can be extended.

For example, the requested voltage of the battery is 14V, and the vehicle is in the condition of sharply turning the steering wheel on the spot, the corresponding voltage overshoot is 0.2V. In this case, the voltage control signal is generated, under the action of the voltage control signal, the requested charging voltage of the battery is reduced from 14V to 13.8V, so the charging voltage of the battery is maintained at value no more than 14V. After the condition of sharply turning the steering wheel on the spot is completed, the voltage control signal is released, and the requested charging voltage of the battery is raised from 13.8V to 14V, so that the charging voltage of the battery is raised to 14V.

In the present embodiment, by controlling the output voltage to increase to a second target voltage, which is a voltage determined based on the second operating condition information before the voltage control signal is generated, the charging state of the battery can be continuously monitored, thereby reducing the risk of overcharging during the entire use process of the battery and extending the service life of the battery.

FIG. 9 is a schematic flow chart of yet another voltage control method provided by the present disclosure. On the basis of the embodiment shown in FIG. 8, FIG. 9 illustrates an implementation manner of executing S104, for example S104'.

At S104', the output voltage is controlled to increase to the second target voltage at a preset lifting rate.

The preset lifting rate is within a preset rate range, and the preset rate range is determined based on performances of components in the vehicle and a target discharge time of the battery.

In the process of increasing the output voltage to the second target voltage, the lifting rate of the output voltage cannot be too high. If the lifting rate of the output voltage is too high, the components in the vehicle cannot withstand the rapidly increased voltage, which will cause damages to the components in the vehicle and make the vehicle unable to be used normally. In addition, the lifting rate of the output voltage cannot be too low. If the lifting rate of the output voltage is too low, the discharge time of the battery will increase, which will cause the remaining capacity of the battery to be completely released, resulting in over-discharge of the battery.

Based on the above, a lifting rate can be determined according to the performance of the components in the vehicle, for example, the adaptability of various components in the vehicle to instantaneous voltage, and the lifting rate is determined as the maximum value of a preset lifting rate range. The target discharge time of the battery may be determined based on the remaining capacity when the output voltage starts to rise. The target discharge time is the time required for rising the output voltage to the second target voltage. In this way, another lifting rate can be determined, and this lifting rate is determined as the minimum value of the preset lifting rate range. The output voltage is controlled to increase to the second target voltage at any preset lifting rate within the preset lifting rate range, so that it is not only possible to avoid damage to the components in the vehicle and ensure the normal use of the vehicle, but also avoid the over-discharge of the battery and extend the service life of the battery.

In the present embodiment, the output voltage is controlled to increase to a second target voltage at a preset lifting rate within a preset rate range, the preset rate range is determined based on the performance of the components in the vehicle and the target discharge time of the battery. In this way, it can avoid damage to the components in the vehicle and ensure the normal use of the vehicle, and can also avoid the over-discharge of the battery and extend the service life of the battery.

The present disclosure further provides a voltage control apparatus. FIG. 10 is a schematic structural diagram of a voltage control apparatus provided by the present disclosure. As shown in FIG. 10, the voltage control apparatus includes a signal generation module 210 and a control module 220.

The signal generation module 210 is configured to generate a voltage control signal according to a first operating condition information of the DC converter and a second operating condition information of the battery.

The control module 220 is configured to control the output voltage of the DC converter to be less than the maximum charging voltage of the battery according to the voltage control signal.

In some embodiments, the signal generation module 210 is further configured to determine the output current change rate of the DC converter according to the first operating condition information; determine the battery SOC according to the second operating condition information; and generate the voltage control signal in response to the output current change rate being greater than a preset change rate and the battery SOC being greater than a preset state of charge.

In some embodiments, the signal generation module 210 is further configured to determine the output current change rate of the DC converter according to the first operating condition information; determine the battery charging capacity according to the second operating condition information; and generate the voltage control signal in response to the output current change rate being greater than a preset change rate and the battery charging capacity being less than a preset charging capacity.

In some embodiments, the signal generation module 210 is further configured to determine the output current change rate of the DC converter according to the first operating condition information; determine the battery SOC and the battery charging capacity according to the second operating condition information; and generate the voltage control signal in response to the output current change rate being greater than a preset change rate, the battery SOC being greater than a preset state of charge and the battery charging capacity being less than a preset charging capacity.

In some embodiments, the control module 220 is further configured to control, according to the voltage control signal, the output voltage to decrease to a first target voltage in a first preset time range, wherein the first target voltage is determined based on a voltage overshoot of the output voltage under a state of load dump.

In some embodiments, the control module 220 is further configured to control the output voltage to be less than the maximum charging voltage of the battery in a second preset time range, and the second preset time range is determined based on the voltage overshoot duration of the output voltage under the state of load dump and the battery SOC.

In some embodiments, the control module 220 is further configured to control the output voltage to increase to a second target voltage, where the second target voltage is a voltage determined based on the second operating condition information before the voltage control signal is generated.

In some embodiments, the control module 220 is further configured to control the output voltage to increase to the second target voltage at a preset lifting rate, and the preset lifting rate is within a preset rate range, and the preset rate range is determined based on the performance of the components in the vehicle and the target discharge time of the battery.

The device provided by the embodiments of the present disclosure can execute the method provided by any embodiment of the present disclosure, and includes corresponding functional modules for executing the method, and has corresponding beneficial effects.

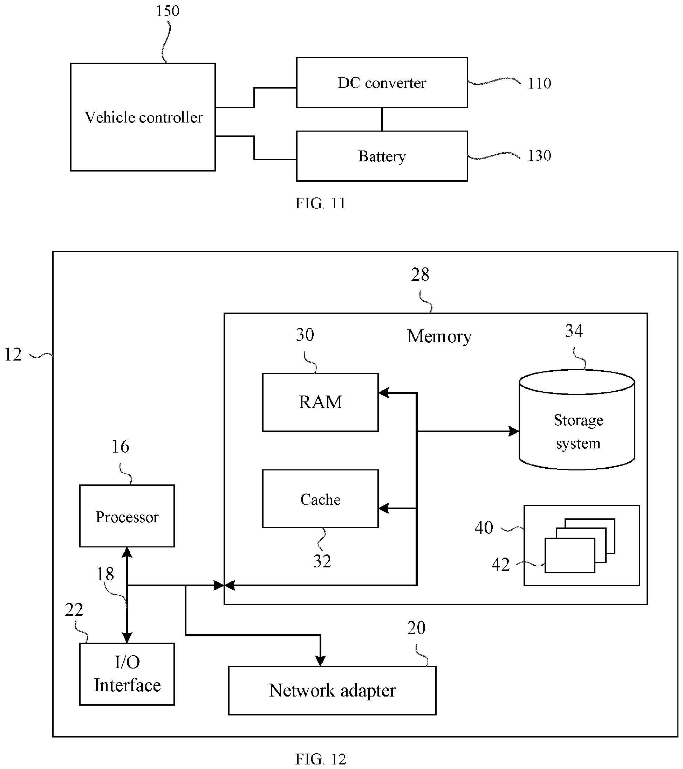

The present disclosure further provides a vehicle. FIG. 11 is a schematic structural diagram of a vehicle provided by the present disclosure. As shown in FIG. 11, the vehicle includes a DC converter 110, a battery 130, and a vehicle controller 150. The vehicle controller 150 is electrically connected to the battery 130 and the DC converter 110, respectively. The input end of the battery 130 is electrically connected to the output end of the DC converter 110.

The battery 130 is used for supplying power to the load. The DC converter 110 is configured reduce the voltage and transmit the reduced voltage signal to the battery 130. The vehicle controller 150 may be used to execute the method provided by any embodiment of the present disclosure.

The vehicle provided in this embodiment includes a vehicle controller that can execute the method provided in any embodiment of the present disclosure. The vehicle controller includes functional modules for executing the method and has corresponding beneficial effects. The vehicle also has the same beneficial effects as the vehicle controller, which will not be repeated here.

The present disclosure further provides an electronic device, including a processor configured to execute a computer program stored in a memory. The computer program implements the steps of the above method embodiment when executed by the processor.

FIG. 12 is a schematic structural diagram of an electronic device provided by the present disclosure. FIG. 12 shows a block diagram of an exemplary electronic device suitable for implementing an embodiment of the present disclosure. The electronic device shown in FIG. 12 is merely an example and should not limit the functions and scope of use of the embodiments of the present disclosure.

As shown in FIG. 12, the electronic device 12 is in the form of a general-purpose computing device. Components of the electronic device 12 may include, but are not limited to, one or more processors 16, a system memory 28, and a bus 18 that connects various system components (including the system memory 28 and the processor 16).

Bus 18 represents one or more of several types of bus structures, including a memory bus or memory controller, a peripheral bus, an accelerated graphics port, a processor or a local bus using any of a variety of bus architectures. By way of example, these architectures include, but are not limited to, an Industry Standard Architecture (ISA) bus, a Micro Channel Architecture (MAC) bus, an Enhanced ISA bus, a Video Electronics Standards Association (VESA) local bus, and a Peripheral Component Interconnect (PCI) bus.

The electronic device 12 typically includes a variety of computer system readable media. These media can be any media that can be accessed by the electronic device 12, including volatile and non-volatile media, removable and non-removable media.

The system memory 28 may include computer system readable media in the form of volatile memory, such as random access memory (RAM) 30 and/or cache 32. The electronic device 12 may further include other removable/non-removable, volatile/non-volatile computer system storage media. By way of example only, the storage system 34 may be used to read and write to non-removable, non-volatile magnetic media (commonly referred to as a "hard drive"). A magnetic disk drive for reading and writing to a removable non-volatile magnetic disk (e.g., a "floppy disk") may be provided, as well as an optical disk drive for reading and writing to a removable non-volatile optical disk (e.g., a CD-ROM, DVD-ROM, or other optical media). In these cases, each drive may be connected to the bus 18 via one or more data media interfaces. The system memory 28 may include at least one program product having a set (e.g., at least one) of program modules that are configured to perform the functions of various embodiments of the present disclosure.

A program/utility 40 having a set (at least one) of program modules 42 may be stored, for example, in the system memory 28, such program modules 42 including, but not limited to, an operating system, one or more application programs, other program modules, and program data, each or some combination of which includes an implementation of a network environment. The program modules 42 generally perform the functions and/or methods of the embodiments described in the embodiments of the present disclosure.

The processor 16 executes at least one of the multiple programs stored in the system memory 28 to perform various functional applications and information processing, such as implementing the method embodiment provided by the embodiment of the present disclosure.

The present disclosure also provides a computer readable storage medium having a computer program stored thereon, and the computer program implements the steps of the above method embodiment when executed by a processor.

One computer readable medium or any combination of multiple computer readable mediums may be utilized. The computer readable medium may be a computer readable signal medium or a computer readable storage medium. The computer readable storage medium may be, for example, but not limited to, an electrical, magnetic, optical, electromagnetic, infrared, or semiconductor system, device, or component, or any combination thereof. More specific examples (a non-exhaustive list) of computer readable storage media include: an electrical connection having one or more conductors, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the context, computer readable storage media may be any tangible media that can contain or store a program for use by or in connection with an instruction execution system, apparatus, or device.

Computer readable signal media may include data signals propagated in the baseband or as part of a carrier wave, which carry computer readable program code. Such propagated data signals may take a variety of forms, including but not limited to electromagnetic signals, optical signals, or any suitable combination of the above. Computer readable signal media may also be any computer readable medium other than a computer readable storage medium, which may send, propagate, or transmit a program for use by or in conjunction with an instruction execution system, apparatus, or device.

The program code embodied on the computer readable medium may be transmitted using any appropriate medium, including but not limited to wireless, wireline, optical fiber cable, RF, etc., or any suitable combination of the foregoing.

Computer program code for performing the operations of the present disclosure may be written in one or more programming languages or a combination thereof, including object-oriented programming languages, such as Java, Smalltalk, C++, and conventional procedural programming languages, such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer through any type of network, including a local area network (LAN) or a wide area network (WAN) domain, or may be connected to an external computer (e.g., via the Internet using an Internet service provider).

The present disclosure also provides a computer program product that, when run on a computer, enabled the computer to execute the steps of implementing the above method embodiments.

It should be noted that relational terms used herein such as "first" and "second" are merely to distinguish an entity or operation from another entity or operation, and do not necessarily require or imply the existence of any such actual relationship or sequence between these entities or operations. Furthermore, the terms "comprising", "including" or any other variation thereof are intended to cover a non-exclusive inclusion, such that a process, method, article, or a device including a list of elements includes not only those elements but also other elements not expressly listed, or elements inherent to the process, method, article or device. Without further limitations, an element defined by the phrase "comprising a ..." does not exclude the presence of additional identical elements in the process, method, article or apparatus including said element.

The above descriptions are only specific embodiments of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments described herein, but will conform to the widest scope consistent with the principles and novel features disclosed herein.

## Claims

1. A voltage control method, comprising:
generating a voltage control signal according to a first operating condition information of a direct current (DC) converter and a second operating condition information of a battery; and
controlling, according to the voltage control signal, an output voltage of the DC converter to be less than a maximum charging voltage of the battery.

2. The method according to claim 1, wherein the first operating condition information comprises at least one of an output current, an output voltage, a voltage overshoot of the output voltage, a voltage overshoot duration of the output voltage, an output current change rate, and an output voltage change rate; the second operating condition information comprises at least one of a battery state of charge (SOC), a battery temperature, a battery charging capability, a battery anti-charging capability, a battery discharge duration, and a battery discharge capability.

3. The method according to claim 1 or 2, wherein the generating a voltage control signal according to a first operating condition information of a direct current (DC) converter and a second operating condition information of a battery comprises:
determining the output current change rate of the DC converter according to the first operating condition information;
determining the battery SOC according to the second operating condition information; and
generating the voltage control signal in response to the output current change rate being greater than a preset change rate and the battery SOC being greater than a preset state of charge.

4. The method according to claim 1 or 2, wherein the generating a voltage control signal according to a first operating condition information of a direct current (DC) converter and a second operating condition information of a battery comprises:
determining the output current change rate of the DC converter according to the first operating condition information;
determining the battery charging capacity according to the second operating condition information; and
generating the voltage control signal in response to the output current change rate being greater than a preset change rate and the battery charging capacity being less than a preset charging capacity.

5. The method according to claim 1 or 2, wherein the generating a voltage control signal according to a first operating condition information of a direct current (DC) converter and a second operating condition information of a battery comprises:
determining the output current change rate of the DC converter according to the first operating condition information;
determining the battery SOC and the battery charging capacity according to the second operating condition information; and
generating the voltage control signal in response to the output current change rate being greater than a preset change rate, the battery SOC being greater than a preset state of charge, and the battery charging capacity being less than a preset charging capacity.

6. The method according to any one of claims 1 to 5, wherein the controlling, according to the voltage control signal, an output voltage of the DC converter to be less than a maximum charging voltage of the battery comprises:
controlling, according to the voltage control signal, the output voltage to decrease to a first target voltage within a first preset time range, wherein the first target voltage is determined based on a voltage overshoot of the output voltage in a state of load dump.

7. The method according to claim 6, wherein the first target voltage is determined based on the voltage overshoot of the output voltage in the state of load dump and a requested charging voltage of the battery.

8. The method according to any one of claims 1 to 5, further comprising:
controlling the output voltage to be less than the maximum charging voltage of the battery within a second preset time range, wherein the second preset time range is determined based on a voltage overshoot duration of the output voltage in a state of load dump and a battery SOC.

9. The method according to claim 8, wherein a minimum value of the second preset time range is the voltage overshoot duration of the output voltage in the state of load dump; a maximum value of the second preset time range is a time required for completely discharging remaining charges in the battery that is determined based on the battery SOC.

10. The method according to any one of claims 1 to 5, further comprising:
controlling the output voltage to increase to a second target voltage, wherein the second target voltage is a voltage determined based on the second operating condition information before the voltage control signal is generated.

11. The method according to claim 10, wherein the controlling the output voltage to increase to a second target voltage comprises:
controlling the output voltage to increase to the second target voltage at a preset lifting rate, wherein the preset lifting rate is within a preset rate range, and the preset rate range is determined based on performances of components in a vehicle and a target discharge duration of the battery.

12. A voltage control apparatus, comprising:
a signal generation module, configured to generate a voltage control signal according to a first operating condition information of a direct current (DC) converter and a second operating condition information of a battery; and
a control module, configured to control an output voltage of the DC converter to be less than a maximum charging voltage of the battery according to the voltage control signal.

13. An electronic device, comprising a processor, wherein the processor is configured to execute a computer program stored in a memory, and the computer program, when executed by the processor, implements steps of the method according to any one of claims 1 to 11.

14. A vehicle, comprising:
a battery for supplying power to a load;
a DC converter, configured to reduce a voltage and transmit a reduced voltage signal to the battery; and
a vehicle controller, configured to execute steps of the method according to any one of claims 1 to 11.

15. A computer readable storage medium storing a computer program, wherein the computer program, when executed by a processor, executes steps of the method according to any one of claims 1 to 11.

16. A computer program product that, when run on a computer, causes the computer to execute steps for implementing the method according to any one of claims 1 to 11.
